# EUROPÄISCHE PATENTANMELDUNG

(11) **EP 2 927 026 A1**
(43) Veröffentlichungstag der Anmeldung: **07.10.2015**
(21) Anmeldenummer: 15152223.2
(22) Anmeldetag: 23.01.2015
(51) Int. Cl.: B60C 15/00, B60C 15/06

(54) **Fahrzeugluftreifen**

(30) Priorität: 27.03.2014 DE 102014205697
(71) Anmelder: Continental Reifen Deutschland GmbH, 30165 Hannover (DE)
(72) Erfinder: Krishnamurthy, Kumar, 30173 Hannover (DE)
(74) Vertreter: Finger, Karsten

(57) **Zusammenfassung**

Fahrzeugluftreifen für PKW mit Gürtellagen, mit zwei Seitenwänden, mit zwei Wulstbereichen (2) mit wenigstens je einem Wulstkern (3), mit einer einlagigen Radialkarkasse (1, 1a), welche den Reifen von Wulstbereich (2) zu Wulstbereich (2) durchläuft, die Wulstbereiche (2) von axial innen nach axial außen umschlingt und als Karkasshochschlag (1a) ausgeführt ist, wobei das Ende des Karkasshochschlages (6) auf einer Höhe angeordnet ist, welche radial oberhalb des Wulstbereiches (2) liegt in einem Höhenbereich (5) von ≥ 13 mm und < 40 mm angeordnet ist, gemessen ab Unterkante des Wulstkernes (3) in radialer Richtung (rR) und dass das Ende des Karkasshochschlages (6) mit einem Materialstreifen (7) abgedeckt ist.

## Beschreibung

Die Erfindung betrifft einen Fahrzeugluftreifen für PKW mit Gürtellagen, mit zwei Seitenwänden, mit zwei Wulstbereichen mit wenigstens je einem Wulstkern, mit einer einlagigen Radialkarkasse, welche den Reifen von Wulstbereich zu Wulstbereich durchläuft, die Wulstbereiche von axial innen nach axial außen umschlingt und als Karkasshochschlag ausgeführt ist, wobei das Ende des Karkasshochschlages auf einer Höhe A angeordnet ist, welche radial oberhalb des Wulstbereiches liegt.

"Wulstbereich" meint Wulstkern sowie Apex (Kernreiter), soweit dieser letztgenannte angeordnet ist.

Ein derartiger Fahrzeugluftreifen ist dem Fachmann hinreichend bekannt. Die Karkasse ist einlagig ausgeführt und ist mit ihrem Karkasshochschlag weit die Seitenwand hoch geführt, so dass das Ende des Karkasshochschlages entweder bis unter die Gürtelkante reicht oder in der oberen, dem Gürtel zugewandten Seitenwandhälfte endet. Durch den die Seitenwand weit hochreichenden Karkasshochschlag ist die Seitenwand insbesondere in der stark auf Biegung beanspruchten sogenannten "Biegezone" vorteilhaft in Bezug auf die Reifenhaltbarkeit versteift. Die Biegezone befindet sich etwa auf mittlerer Seitenwandhöhe. Jedoch ist der Reifen durch den weit die Seitenwand hochreichenden Karkasshochschlag im Gewicht hoch und in Bezug auf den Materialeinsatz teuer.

Es ist die Aufgabe der Erfindung, einen Fahrzeugluftreifen für PKWs zur Verfügung zu stellen, der vergleichsweise kostengünstig zu fertigen ist, der vergleichsweise leicht an Gewicht ist und der in seiner Haltbarkeit etwa gleich gut ist.

Die Aufgabe wird gelöst, indem die Höhe A in einem Höhenbereich von ≥ 13 mm und < 40 mm angeordnet ist, gemessen ab Unterkante des Wulstkernes in radialer Richtung und indem das Ende des Karkasshochschlages mit einem Materialstreifen eingeschlagen ist.

Es ist ein PKW-Luftreifen geschaffen, der einen vergleichsweise niedrigen Karkasshochschlag aufweist. Dieser reicht in radialer Richtung über den Wulstbereich (Wulstkern und, soweit ein Kernreiter angeordnet ist, auch Kernreiter) hinaus, endet aber kurz oberhalb des Wulstbereiches. Hierdurch ist sowohl an Karkassmaterial als auch an Reifengewicht eingespart.

Das Ende des Karkasshochschlages ist zudem mit einem Materialstreifen eingeschlagen. Dieser Materialstreifen erhöht die Haltbarkeit des Reifens, indem einerseits keine produktionsbedingten freien (blanken) Festigkeitsträgerenden der Karkassfestigkeitsträger vorliegen. Freie Festigkeitsträgerenden in einer Höhe zwischen 13 - 40mm, gemessen ab Unterkante Wulstkern, würden die Haltbarkeit des Reifens herabsetzen. Andererseits ist durch den Materialstreifen ein Puffereffekt erreicht, der die in diesem Bereich der Biegezone auftretenden hohen Scherkräfte puffert, dieses insbesondere im Bereich der freien Filamentenden der Karkassfestigkeitsträger.

Vorteilhaft ist es, wenn die Höhe A in einem Höhenbereich von ≥ 25 mm und ≤ 33 mm angeordnet ist, gemessen ab Unterkante des Wulstkernes in radialer Richtung. Hierdurch ist, auch unter Berücksichtigung von Fertigungstoleranzen, immer eine Staffelung von oberem Ende des Wulstbereiches und dem Ende des Karkasshochschlages erreicht. Eine Staffelung verbessert die Haltbarkeit des Reifens.

In einer bestimmten Ausführung der Erfindung besteht jeder Wulstbereich nur aus einem Wulstkern, wobei der Wulstkern vorzugsweise ein Hochkantkern ist. Durch diese Konstruktion ist besonders in Bezug auf das Reifengewicht und die Gestehungskosten des Reifens eingespart.

In einer anderen Ausführung der Erfindung besteht der Wulstbereich aus Wulstkern und Apex.

Zweckmäßig ist es, wenn das obere Ende des Wulstbereiches in einem Höhenbereich von ≥ 8 mm und ≤ 19 mm angeordnet ist, gemessen ab Unterkante des Wulstkernes in radialer Richtung, wobei das Ende des Karkasshochschlages immer oberhalb des oberen Endes des Wulstbereiches angeordnet ist.

Vorteilhaft ist es, wenn der das Ende des Karkasshochschlages abdeckende Materialstreifen ein Gummistreifen ist, insbesondere wenn der Gummistreifen aus Material der Karkassgummierung besteht. Der Materialstreifen aus Material der Karkassgummierung liegt teilweise unmittelbar an der Karkassgummierung an. Die Vulkanisation von Lagen aus gleichen Mischungen bewirkt eine besonders gute Haltbarkeit und Lagentrennungen sind zuverlässig vermieden.

Zweckmäßig ist es, wenn der Gummistreifen das Ende des Karkasshochschlages umschlingt, wobei der Gummistreifen das vorgenannte Ende vorzugsweise in einer U- oder J-Form umschlingt. Besonders vorteilhaft ist es, wenn auf derjenigen Seite des Gummistreifens, welche auf das Ende des Karkasshochschlages aufgelegt wird, ein Haftvermittler angeordnet ist. Das Ende des Karkasshochschlages ist zuverlässig abgedeckt. Der Haftvermittler bewirkt insbesondere im kritischen Bereich der freien Festigkeitsträgerenden am Ende des Karkasshochschlages eine zuverlässige Haftung von Gummistreifen und dem Ende des Karkasshochschlages, insbesondere den freien Festigkeitsträgerenden, so dass Lufteinschlüsse, welche die Haltbarkeit des Reifens herabsetzen könnten, in diesem Bereich vermieden sind.

Vorteilhaft ist es, wenn die Festigkeitsträger der Karkasse einen Winkel zwischen 86° und 92° mit der Reifenumfangsrichtung einschließen und wenn die Festigkeitsträger der Karkasse Korde sind, wobei die Korddichte in der Karkasslage 100 bis 125 epdm beträgt. "Epdm" steht für "ends per decimeter" und beschreibt die Festigkeiträgerdichte in einer Verstärkungslage in Festigkeitsträgerenden pro dm.

Vorteilhaft ist es, wenn axial außen in Bezug auf den Wulstbereich ein Seitenwandstreifen und ein Wulststreifen in einer Grenzlinie aneinander angrenzen, wobei die Grenzlinie - im

Reifenquerschnitt betrachtet - von axial innen oben nach axial außen unten verläuft oder wobei die Grenzlinie von axial innen unten nach axial außen oben verläuft und dass das Ende des Karkasshochschlages im Bereich des Seitenwandstreifens liegt. Der Verlauf der Grenzlinie von axial innen oben nach axial außen unten wird als "Transitions-Linie" bezeichnet, während der Verlauf der Grenzlinie von axial innen unten nach axial außen oben als "inverse Transitions-Linie" bezeichnet wird.

Besonders vorteilhaft für die Reifenhaltbarkeit und Rollwiederstand ist die inverse Transition.

Zweckmäßig ist es, wenn der Fahrzeugluftreifen eine Größe ≥ 13 Zoll und vorzugsweise keine Felgenschutzrippe aufweist. Fahrzeugluftreifen ohne Felgenschutzrippe weisen einen besseren Rollwiderstand auf, als Reifen mit Felgenschutzrippe und sind zudem kostengünstiger zu fertigen. Jedoch sind Reifen ohne Felgenschutzrippe üblicherweise stärker im Bereich der Biegezone belastet und daher u.U. in ihrer Haltbarkeit herabgesetzt. Durch die erfindungsgemäße Ausgestaltung ist die Haltbarkeit bei Reifen ohne Felgenschutzrippe verbessert.

Weitere Merkmale, Vorteile und Einzelheiten der Erfindung werden anhand der Zeichnung, die ein schematisches Ausführungsbeispiel darstellt, näher erläutert.

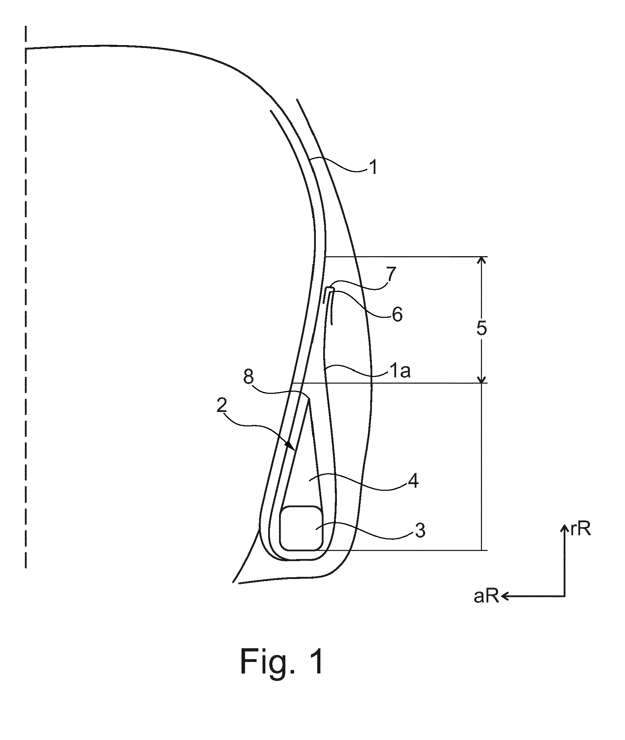

Die **Fig.1** zeigt schematisch einen hälftigen Querschnitt durch ausgewählte Bauteile eines PKW-Luftreifens, hier die Karkasse 1 und den Wulstbereich 2. Die Karkasse 1 ist einlagig ausgeführt und umschlingt die Wulstbereiche 2 von axial innen nach axial außen und endet jeweils als Karkasshochschlag 1a. Das Ende des Karkasshochschlages 6 liegt in einem Höhenbereich 5, wobei der Höhenbereich 5 radial oberhalb/ außerhalb in Bezug auf den Wulstbereich 2 angeordnet ist. Der Wulstbereich 2 besteht aus Wulstkern 3 und Kernreiter (Apex) 4. Der Höhenbereich 5 ist in radialer Richtung in einem Bereich von ≥ 25 mm und ≤ 33 mm angeordnet, gemessen ab Unterkante des Wulstkernes 3 in radialer Richtung rR. Das Ende des Karkasshochschlages 6, welches produktionsbedingt freie (blanke) Festigkeitsträgerenden (nicht dargestellt) aufweist, ist mit einem Materialstreifen 7 abgedeckt. Der Materialstreifen 7 ist ein Gummistreifen, welcher aus der Kautschukmischung der Karkassgummierung besteht. Der Materialstreifen 7 weist eine Dicke von 0,4 mm bis 0,9 mm auf. Der Materialstreifen 7 weist eine J-Form auf, wobei der längere Schenkel axial außen angeordnet ist. Die Festigkeitsträger der Karkasse 1 schließen einen Winkel zwischen 86° und 92° mit der Reifenumfangsrichtung ein. Die Festigkeitsträger der Karkasse 1 sind Korde aus Rayon oder Polyester, wobei die Korddichte in der Karkasslage 100 bis 125 epdm beträgt. Die Karkassgummierung weist einen Rückprallwert von 45 bis 55 % bei Raumtemperatur nach DIN53512, eine Shore A-Härte von 55 - 60 nach DIN53505 und eine Zugfestigkeit von 10 - 14 MPa nach DIN53479 auf.

Der Gummistreifen ist aus der gleichen Mischung wie die Karkassgummierung gefertigt.

### Bezugszeichenliste

### (Teil der Beschreibung)

- 1: Karkasslage
- 1a: Karkasshochschlag
- 2: Wulstbereich
- 3: Wulstkern
- 4: Kernreiter (Apex)
- 5: Höhenbereich
- 6: Ende Karkasshochschlag
- 7: Materialstreifen
- 8: Oberes Ende des Wulstbereiches
- aR: axiale Richtung
- rR: radiale Richtung

## Patentansprüche

1. Fahrzeugluftreifen für PKW mit Gürtellagen,
mit zwei Seitenwänden,
mit zwei Wulstbereichen (2) mit wenigstens je einem Wulstkern (3),
mit einer einlagigen Radialkarkasse (1, 1a), welche den Reifen von Wulstbereich (2) zu Wulstbereich (2) durchläuft, die Wulstbereiche (2) von axial innen nach axial außen umschlingt und als Karkasshochschlag (1a) ausgeführt ist, wobei das Ende des Karkasshochschlages (6) auf einer Höhe angeordnet ist, welche radial oberhalb des Wulstbereiches (2) liegt,
**dadurch gekennzeichnet,**
**dass** die Höhe in einem Höhenbereich (5) von ≥ 13 mm und < 40 mm angeordnet ist, gemessen ab Unterkante des Wulstkernes (3) in radialer Richtung (rR) und dass das Ende des Karkasshochschlages (6) mit einem Materialstreifen (7) abgedeckt ist.

2. Fahrzeugluftreifen nach Anspruch 1,
**dadurch gekennzeichnet, dass** die Höhe in einem Höhenbereich (5) von ≥ 25 mm und ≤ 33 mm angeordnet ist, gemessen ab Unterkante des Wulstkernes (3) in radialer Richtung (rR).

3. Fahrzeugluftreifen nach Anspruch 1 oder 2,
**dadurch gekennzeichnet, dass** jeder Wulstbereich (2) nur aus einem Wulstkern (3) besteht, wobei der Wulstkern (3) vorzugsweise ein Hochkantkern ist.

4. Fahrzeugluftreifen nach Anspruch 1 oder 2,
**dadurch gekennzeichnet, dass** der Wulstbereich (2) aus Wulstkern (3) und Apex (4) besteht.

5. Fahrzeugluftreifen nach einem oder mehreren der vorangehenden Ansprüche, **dadurch gekennzeichnet, dass** das obere Ende des Wulstbereiches (8) in einem Höhenbereich von ≥ 8 mm und ≤ 19 mm angeordnet ist, gemessen ab Unterkante des Wulstkernes (3) in radialer Richtung (rR).

6. Fahrzeugluftreifen nach einem oder mehreren der vorangehenden Ansprüche, **dadurch gekennzeichnet, dass**
der das Ende des Karkasshochschlages (6) abdeckende Materialstreifen (7) ein Gummistreifen ist.

7. Fahrzeugluftreifen nach Anspruch 6,
**dadurch gekennzeichnet, dass** der Gummistreifen (7) aus Material der Karkassgummierung besteht.

8. Fahrzeugluftreifen nach Anspruch 6 oder 7,
**dadurch gekennzeichnet, dass** auf derjenigen Seite des Gummistreifens, welche auf das Ende des Karkasshochschlages aufgelegt ist, ein Haftvermittler angeordnet ist.

9. Fahrzeugluftreifen nach einem oder mehreren der vorangehenden Ansprüche, **dadurch gekennzeichnet, dass** der Materialstreifen (7) das Ende des Karkasshochschlages (6) umschlingt, wobei der Materialstreifen (7) vorzugsweise eine U- oder J-Form aufweist.

10. Fahrzeugluftreifen nach einem oder mehreren der vorangehenden Ansprüche, **dadurch gekennzeichnet, dass** die Festigkeitsträger der Karkasse (1, 1a) einen Winkel zwischen 78° und 90° mit der Reifenumfangsrichtung einschließen und dass die Festigkeitsträger der Karkasse (1, 1a) Korde sind, wobei die Korddichte in der Karkasslage 100 bis 125 epdm beträgt.

11. Fahrzeugluftreifen nach einem oder mehreren der vorangehenden Ansprüche, **dadurch gekennzeichnet, dass** axial außen in Bezug auf den Wulstbereich (2) ein Seitenwandstreifen und ein Wulststreifen in einer Grenzlinie aneinander angrenzen, wobei die Grenzlinie - im Reifenquerschnitt betrachtet - von axial innen oben nach axial außen unten verläuft oder wobei die Grenzlinie von axial innen unten nach axial außen oben verläuft und dass das Ende des Karkasshochschlages (6) im Bereich des Seitenwandstreifens liegt.

12. Fahrzeugluftreifen nach einem oder mehreren der vorangehenden Ansprüche, **dadurch gekennzeichnet, dass** dieser eine Größe ≥ 13 Zoll und vorzugsweise keine Felgenschutzrippe aufweist.
